# EUROPÄISCHE PATENTANMELDUNG

(11) **EP 1 609 745 A2**
(43) Veröffentlichungstag der Anmeldung: **28.12.2005**
(21) Anmeldenummer: 05104780.1
(22) Anmeldetag: 02.06.2005
(51) Int. Cl.: B65G 17/00, B65D 1/34

(54) **Behälter zum Transportieren von Stückgütern**

(30) Priorität: 25.06.2004 DE 102004030870
(71) Anmelder: SIEMENS AKTIENGESELLSCHAFT, 80333 München (DE)
(72) Erfinder: Wucherer, Matthias, 91330, Eggolsheim (DE)

(57) **Zusammenfassung**

Die Erfindung betrifft einen Behälter zum Transportieren von Stückgütern, insbesondere von Gepäckstücken auf einer Förderbahn mit Trag- und Führungselementen für den Behälter und mindestens einer Entladestelle zum Entleeren des Stückgutes aus dem Behälter, wobei jeder Behälter aus einem oberen, das aufliegende Stückgut aufnehmenden Teil und einem unteren, auf der Förderbahn aufliegenden Teil besteht. Um einen leichten, aber dennoch stabilen stapelbaren Behälter zu schaffen, der in jeder Förderrichtung kontrolliert auf der Förderbahn führbar ist und der bei geringer Bruchgefahr und Geräuschemission optimal mit Röntgenstrahlen durchleuchtbar ist und der preisgünstig herstellbar ist, wir vorgeschlagen, den das Stückgut aufnehmende obere Teil (3) des Behälters (1) aus einer den unteren Teil (2) des Behälters (1) tragfähig überspannenden, aus einem elastischen Material bestehenden Lagerfläche (3a, 19) auszubilden.

## Beschreibung

Die Erfindung betrifft einen Behälter zum Transportieren von Stückgütern, insbesondere von Gepäckstücken auf einer Förderbahn mit Trag- und Führungselementen für den Behälter und mindestens einer Entladestelle zum Entleeren des Stückgutes aus dem Behälter, wobei jeder Behälter aus einem oberen, das aufliegende Stückgut aufnehmenden Teil und einem unteren, auf der Förderbahn aufliegenden Teil besteht.

Behälter zum Transportieren von Stückgütern der eingangs beschriebenen Art sind beispielsweise aus der WO 03/026976 A1 bekannt; sie werden überwiegend in den Gepäcktransport- und Sortiersystemen in Flughäfen eingesetzt, beispielsweise um das Fluggepäck vom Checkin-Schalter dem richtigen Flug zuzuleiten. Die Behälter zum Transportieren der einzelnen Gepäckstücke sind vorzugsweise aus durchleuchtbarem Kunststoff geformt und/oder zusammengesetzt; sie werden auf parallel zueinander angeordneten Rollen oder Gurten aufliegend auf Förderbahnen transportiert in deren Verlauf Kurven, Weichen und auch Eckumsetzer angeordnet sind, um die Behälter den jeweiligen Bestimmungsort zuführen zu können.

Die Behälter sind gewöhnlich relativ flach ausgeführt und meistens aus mindestens zwei Teilen zusammengesetzt, von denen der erste obere Teil das zu transportierende Stückgut aufnimmt und der zweite untere Teil, auf der Förderbahn aufliegend, die Antriebskraft der Förderbahn aufnimmt, mit der der Behälter an den Bestimmungsort bewegt wird.

Der Behälter wird aus verschleißfestem Material hergestellt, das auch bei hohen Transportgewichten die notwendige Tragfestigkeit aufweist, wobei vorwiegend glasfaserverstärkte Kunststoffe (GFK) verwendet werden. Um die Behälter und die darin transportierten Stückgutteile auf allen Förderwegen, auch in überhöhten Kurven und über Weichen sicher führen zu können, werden sie sehr steif und formstabil ausgeführt, weil man auch beim Wechsel der Streckenführung stets eine gute Auflagerung auf der Förderbahn erhalten möchte. Die erforderliche Formstabilität und die geforderte Verschleißfestigkeit des Materials führen aber dazu, dass sehr viel Kunststoffmaterial verwendet werden muss. Das macht die Behälter nicht nur teuer, es ergibt sich auch der Nachteil, dass aufgrund der Materialdichte und der kompakten Form beim Durchleuchten der in den Behältern liegenden Gepäckstücke in den Röntgengeräten der Flughafensicherung wegen der Abschattungen des Behältermaterials unzureichende Bilder geliefert werden, so dass der Inhalt der Gepäckstücke oft nur schwer zu identifizieren ist. Schließlich sind die schweren Behälter sehr aufwändig zu handhaben.

Die in der WO 03/026976 beschriebenen Behälter sind hinsichtlich des Designs so gestaltet, dass sie mit Röntgenstrahlen besser durchleuchtbar sind, so dass nach Angaben in der Patentanmeldung die Beschattung durch das Material nur ca. 20% beträgt, doch lösen die bekannten Behälter die vorstehend beschriebenen Probleme beim Transport nicht.

Um das Stückgut auch in Kurvenstrecken sicher in dem Behälter zu halten, ist der Auflagebereich für das Stückgut im oberen Teil des Behälters flach gemuldet; das Entladen der Behälter erfolgt durch Kippen des kompletten Behälters im Bereich einer der vorgesehenen Entladestationen, wodurch das Stückgut oder Gepäckstück seitlich auf eine Rutsche überführt werden kann. Die Be- und Entladestationen, in denen die Behälter durch seitliches Kippen entladen werden, sind allerdings relativ aufwändig.

Da aber aufwändiger Maßnahmen die bekannten Behälter in Weichen und an Kreuzungen, in vertikalen konvexen und in horizontalen Kurven nur unzureichend kontrolliert auf der Förderbahn geführt werden, entsteht beim Transport auf der Förderbahn großer Lärm, insbesondere dann, wenn die Behälter seitlich an die Führungsleisten anschlagen oder in vertikalen Kurven mit ihren planen Unterseiten auf die Trag- und Führungselemente aufschlagen. Damit verbunden ist ein starker Verschleiß an den Behältern und den Führungen.

Aufgabe der vorliegenden Erfindung ist es, ausgehend von den eingangs beschriebenen bekannten Behältern zum Transportieren von Stückgütern, einen neuartigen leichten, aber dennoch stabilen stapelbaren Behälter zu schaffen, der in jeder Förderrichtung kontrolliert auf der Förderbahn führbar ist, der bei geringer Bruchgefahr und Geräuschemission optimal mit Röntgenstrahlen durchleuchtbar ist und der preisgünstig herstellbar ist.

Zur Lösung der Aufgabe wird erfindungsgemäße vorgeschlagen, dass der das Stückgut aufnehmende obere Teil des Behälters aus einer den unteren Teil des Behälters tragfähig überspannenden, aus einem elastischen Material bestehenden Lagerfläche gebildet ist.

Erstmals wird ein aus biegesteifen und verschleißfestem Material gebildeter Behälter mit einer Auflage für das Stückgut versehen, die aus einem elastischen, dem Behälter überspannenden Material bestehend, das den Behälter, vergleichbar mit einer Hängematte, überspannt. Auf diese Weise wird der Behälter, bei unverminderter Stabilität der Auflage für das Stückgut, wesentlich leichter, der Materialeinsatz wird geringer und die Geräuschemission wird stark reduziert. Aufgrund des geringen Materialeinsatzes ist vor allem die Durchleuchtbarkeit des Behälters und des auf der Lagerfläche aufliegenden Stückgutes optimiert.

Vorzugsweise ist nach weiteren Ausgestaltungen der Erfindung die Lagerfläche des stückgutaufnehmenden oberen Teils des Behälters aus einem Netzgewebe, einem Tuchgewebe oder aus einem Gurtgeflecht hergestellt. Die Lagerfläche ist in jedem Fall so gestaltet, dass sie auch die maximal auftretenden Belastungen durch schweres Stückgut, z.B. Gepäckstücke, sicher aufnimmt. Dennoch sind das Gewebe oder das Geflecht dünn genug, um problemlos von den am Flughafen vorhandenen Röntgengeräte durchleuchtet zu werden, ohne das die bei Behältern mit großem Materialeinsatz auftretenden Abschattungen auf dem Bildschirm erkennbar sind.

In einer weiteren Ausgestaltung der Erfindung ist vorgesehen, die aus elastischem Material bestehende Lagerfläche rutschhemmend auszuführen, um dem Stückgut, auch bei Kurvenfahrten oder beim Abbremsen und Beschleunigen, einen sicheren Halt auf der Lagerfläche zu gewähren.

Selbstverständlich sind der obere Teil und der untere Teil des Behälters komplett aus einem für Röntgenstrahlungen durchlässigen Material gebildet.

Nach einem besonders günstigen Merkmal der vorliegenden Erfindung ist vorgesehen, dass der untere Teil des Behälters aus einem beschränkt verwindbaren, aus Längs- und Querholmen zusammengesetzten Tragrahmen besteht, innerhalb dessen die Lagerfläche aus elastischem Material angeordnet ist.

Dieser Rahmen hat mehrere Vorteile. Zum einen reduziert er den Materialeinsatz für einen tragfähigen Behälter auf das Notwendigste und spart somit an Materialkosten und Gewicht. Die Durchleuchtbarkeit des durch das Stückgut oder Gepäckstück belegten Bereiches des Behälters wird nicht gestört, der Lärm beim Transport des Behälters wird allein dadurch reduziert, dass auf einen großen Resonanzkörper verzichtet wird. Da der untere Teil des Behälters beschränkt verwindbar ist, kann sich der Behälter in vertikalen konkaven und konvexen Kurven gewollt und besser den Führungen der Förderbahnen anpassen, gleiches gilt für horizontale Kurven, Kreuzungen und Weichen, so dass stets eine günstige Auflage durch Anpassung des Behälters an die Auflageflächen der Förderbahn erhalten bleibt.

Vorzugsweise sind nach einem weiteren Merkmal der Erfindung die Längsholme des Behälters zur Übertragung kinetischer Energie und zur Aufnahme von horizontalen und vertikalen Führungskräften entsprechend konturiert. Um die gewollte beschränkte Verwindbarkeit der Behälter zu erreichen, ist nach einem Vorschlag der Erfindung vorgesehen, dass die Verbindung der aneinandergrenzenden Längs- und Querholme raumgelenkig erfolgt. Dieser Raumgelenkigkeit sollte so eingestellt sein, dass nur die notwendige geringe Verwindung des Behälters in sich stattfindet, jedoch dessen Stabilität zur Übertragung der kinetischen Energie und zur Aufnahme der Führungskräfte nicht eingeschränkt wird. Die Verwindbarkeit kann auch durch den Einsatz unterschiedlicher Behältermaterialien erreicht werden, so können die Längsholme aus einen weicheren und die Querholme aus einem härteren Kunststoff hergestellt sein.

Bei einem erfindungsgemäß ausgestalteten Behälter ist es von Vorteil, wenn die aus elastischem Material gebildete Lagerfläche beidseitig des Behälters an dessen in Transportrichtung ausgerichteten Längsholmen befestigt ist. Auf diese Weise hängt die Transportfläche, trogartig, sich in Transportrichtung erstreckend, durch und bildet somit auch in Kurvenstrecken die eingangs beschriebene sichere Auflage für das Stückgut.

Um eine Identifikation des Behälters während des Transports und in den einzelnen Stationen jederzeit zu ermöglichen, wird in einer weiteren günstigen Ausgestaltung der Erfindung vorgeschlagen, in oder an dem unteren Teil des Behälters die ansich bekannten Transponder anzuordnen, die nach einem weiteren Merkmal der Erfindung vorzugsweise außerhalb des Sichtbereichs der Durchleuchtungsstationen angeordnet sind. Um zu verhindern, dass die pn-Übergänge der Halbleiter auf Dauer geschädigt werden, können die Transponder durch eine Metallabdeckung gegen die Röntgenstrahlen geschützt werden.

Um eine günstige Führung der Behälter auf der Förderbahn zu erzielen, können nach einem weiteren Merkmal der Erfindung die Längs- und/oder Querholme des Behälters mit symmetrisch zur Behältermittelachse angeordneten Tragkufen versehen werden. Die Tragkufen gestatten eine Anpassung an die Förderbahn auch in Bereichen von Weichen oder Kreuzungen oder Überhöhungen in Kurvenstrecken.

Erfindungsgemäß können den Tragkufen und/oder den Tragholmen in Transportrichtung umlaufende, auf Bahnen des Förderers abrollende Abstützrollen oder -räder zugeordnet sein.

Da die Behälter gewöhnlich durch Transportmittel, wie Gurte oder Riemen, auf diesen aufliegend, transportiert werden, sind die vorgesehenen Abstützrollen und -räder zusätzlich vorgesehen, wobei nach einem weiteren Merkmal der Erfindung die Bahnen für die Abstützrollen oder -rädern seitlich neben dem Transportmittel der Behälter am Förderer ausgebildet sind und die Abstützrollen oder -räder nur bei vorbestimmten Behälterbelastungen, auf den Bahnen abtragend, einen Teil des Behältergewichts aufnehmen. Das bedeutet, dass die Räder nur dann zum Einsatz kommen, wenn die Auflast auf dem Transportmittel zu groß würde und dadurch beispielsweise eine zu starke Reibung des Traggurtes hervorrufen würde.

Günstigerweise sind die Abstützrollen oder -räder mit positiven Sturz nach innen geneigt angeordnet, um in Kurvenfahrten bei höheren Geschwindigkeiten einen Teil der nach außen wirkenden Kräfte aufnehmen zu können.

Um die Behälter auch im Bereich von Eckumsetzern günstig manipulieren zu können, ist nach einem anderen Vorschlag der Erfindung vorgesehen, an oder auch an den Querholmen Kufen anzuordnen.

Nach einem besonders günstigen Merkmal der Erfindung ist vorgesehen, dass das Behälteroberteil als Querband (Crossbelt) ausgebildet ist. Querband-Fördersysteme sind an sich bekannt, jedoch nicht in Zusammenhang mit den erfindungsgemäßen besonderen Behältern.

Zur Verwirklichung der erfindungsgemäßen Querband-Technik sind nach einem Merkmal der Erfindung parallel zu den Längsholmen des Behälters an jedem Längsholm mindestens eine Umlenkwalze für die das Behälteroberteil überspannende, als endloses Tragband gestaltete Lagerfläche angeordnet, um die das Tragband antreibbar geführt ist.

Bei dieser Lösung wird das Tragband nicht an den Holmen befestigt, sondern als endloses Querband ausgebildet, welches beidseitig an den Längsholmen des Behälters um die Umlenkwalzen geführt ist. Das endlose Tragband hängt normalerweise beim Transport des Behälters leicht trogförmig durch und hält das darauf aufliegende Stückgut sicher, auch in Kurvenstrecken fest. Zum Entladen des Behälters kann das endlose Tragband, um die seitlichen Umlenkwalzen umlaufend, angetrieben werden, um das aufliegende Stückgut seitlich auszutragen.

Um das Austragen des Stückgutes zu erleichtern, ist nach einem weiteren Merkmal der Erfindung vorgesehen, dass das Obertrum des endlos umlaufenden Tragbandes für das Stückgut in der Entladeposition des Behälters zwischen den Umlenkwalzen in eine im wesentlichen horizontale Auflageposition gespannt werden kann. Dadurch wird die trogförmige Muldung des Tragbandes weitgehend aufgehoben, so dass eine günstigere seitliche Austrag des Stückgutes zu erreichen ist.

Das Spannen des Obertrums des umlaufenden Tragbandes zum Entladen des Stückgutes kann beispielsweise nach einem weiteren Merkmal der Erfindung dadurch erfolgen, dass das Untertrum des Tragbandes zwischen den Umlenkwalzen mittels Antriebsrollen oder -walzen angehoben wird. Das Anheben des Untertrums bewirkt gleichzeitig, dass das Durchhängen des Obertrums aufgehoben wird. Zum Anheben des Untertrums des Tragbandes werden Rollen oder Walzen von unten gegen die nach unten gerichtete Oberfläche des Tragbandes geführt.

Um das Tragband in der Entladeposition des Behälters antreiben zu können, ist nach einem weiteren Merkmal der Erfindung vorgesehen, dass auf der Oberfläche des Tragbandes mindestens bereichsweise eine quer zu dessen Umlaufrichtung verlaufende zahnartige Stollenstruktur vorgesehen ist, mit der im Bereich des Untertrums des Tragbandes entsprechend kontrollierte Antriebsrollen mindestens zeitweise in Eingriff bringbar sind.

Günstigerweise sind die Antriebsrollen in der Entladestation des Behälters unterhalb des Tragbandes im Gerüst des Förderers gelagert und dort aus einer Ruheposition unterhalb der Förderebene in eine Entladeposition anhebbar, in der sie mit dem Tragband, wie beschrieben, korrespondieren. Die Antriebsrollen können auch als Antriebsriemen gestaltet sein, der dann die mit der Stollenstruktur des Tragbandes korresponierende Zahnstruktur aufweist und eine Mitnahme des Tragbandes beim Antrieb des Antriebsriemens gewährleistet.

Um während des Transports des Behälters sicherzustellen, dass das Tragband sich nicht ungewollt um die Umlenkwalzen dreht, sind nach einem andere Merkmal der Erfindung Bremselemente für das Tragband vorgesehen. Diese pressen beim Transport des Behälters das Tragband gegen die Oberfläche des Längsholmes und blockieren dort die Umlaufbewegung des Tragbandes und verhindert damit ein Entladen von aufliegendem Stückgut, etwa in Kurven der Förderbahn, sicher.

Vorzugsweise werden die Bremselemente durch beidseitig an den Querholmen an einer Wippe gelagerte jeweils zwei Umlenkwalzen gebildet, von denen durch Verschwenken der Wippe mindestens eine Umlenkwalze mit dem Tragband gegen den Längsholm pressbar und damit das Tragband in Umlaufrichtung blockierbar ist.

Das Anpressen der Umlenkwalze mit dem Tragband gegen den Längsholm kann vorzugsweise federkraftgestützt erfolgen, wobei die Kinematik der Wippe und deren Anlenkpunkte derartig gewählt sind, dass das Lösen der Bremswirkung der Umlenkwalzen entgegen der Federwirkung durch Anheben des Untertrums des Tragbandes in der Entladestation erfolgt. Sobald das Untertrum des Tragbandes, beispielsweise mit der Antriebsrolle in Berührung gelangt und durch weiteres Anheben der Antriebsrolle das Tragband gespannt wird, werden über die Wippe die Anpresskräfte der Umlenkwalze aufgehoben, das Tragband kommt von der Oberfläche des Längsholmes frei und der eingeschaltete Antrieb kann das darauf aufliegende Stückgut seitlich austragen.

Um zu verhindern, dass beim Anheben der Antriebsrollen gegen das Untertrum des Tragbandes der Behälter vom Förderer abgehoben wird, sind in der Be- und/oder Entladeposition des Behälters Elemente zum Fixieren des Behälters während des Be- und/oder Entladens vorgesehen. Diese Elemente können nach einem ausgestalteten Merkmal der Erfindung in der Entladestation am Rahmen des Förderers angelenkte einschwenkbare Klinken sein, mit denen der Behälter in seiner Position festgehalten wird.

Die erfindungsgemäß gestalteten Behälter sind stapelbar.

Mit dem neuartigen Behältersystem und der vorgeschlagenen Be- und Entladevorrichtung wird ein besonders vorteilhaftes System, insbesondere zum Einsatz für die Gepäckförderung an Flughäfen, geschaffen. Die Behälter sind optimal zum Durchleuchten mit Röntgenstrahlen geeignet. Die geringe zulässige Verwindbarkeit jedes Behälters ermöglicht dessen kontrolliertere Führung und Anpassung des Behälters an die Verhältnisse der Förderbahn in jeder Förderrichtung. Die Ausbildung der Lagerfläche aus einem tragfähigen elastischen Material minimiert die Bruchgefahr und die Geräuschemission, reduziert das Gewicht und verringert die Materialkosten. Der Transport von Stückgut mit geringen Verschleiß der Behälter möglich, weil der Behälter in jeder Position eine stabile Lage einnimmt. Die günstige Gestaltung des Behälters mit der Querband-Funktion ermöglicht ein problemloses Entladen des Stückgutes in den Entladestationen. Schließlich zeichnet sich der erfindungsgemäße Behälter durch die geringe Anzahl von Elementen und geringen Platzbedarf aus.

Ein Ausführungsbeispiel der vorliegenden Erfindung wird in der Zeichnung dargestellt und nachfolgend beschrieben. Es zeigt:
- Figur 1: eine perspektivische Ansicht eines erfindungsgemäßen Behälters,
- Figur 2: den Behälter nach Figur 1 mit abgehoben gezeichneter elastischer Lagerfläche,
- Figur 3: eine perspektivische Ansicht des Behälters nach Figur 1, von unten,
- Figuren 4a - c: Querschnitte durch verschiedener Ausführungen der Auflagen der Behälterlängsholme,
- Figur 5: eine Explosionsdarstellung des unteren Teils des Behälters,
- Figur 6: einen Querschnitt durch einen Behälter mit als Querband ausgebildetem Behälteroberteil,
- Figur 7: die Entladeposition des Behälters nach Figur 6,
- Figur 8: eine andere Ausbildung des Behälters mit Querband,
- Figur 9: einen Querschnitt durch den Behälter mit Querband und Bremseinrichtung und
- Figuren 10a, b: den Querschnitt durch je eine Behälterhälfte in gebremster und ungebremster Stellung des Querbandes.

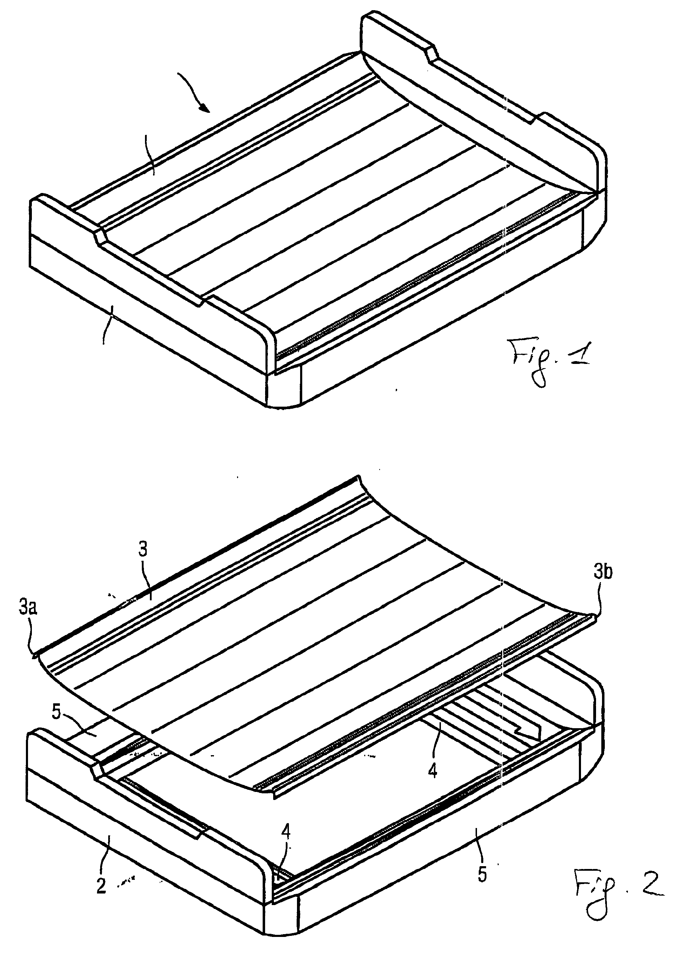

In Figur 1 ist ein insgesamt mit 1 bezeichneter erfindungsgemäßer Behälter perspektivisch dargestellt. Er besteht aus dem auf einer (nicht dargestellten) Förderbahn aufliegenden unteren Teil 2 und dem oberen Teil 3 des Behälters 1, wobei letzterer das Stückgut während des Transport aufnimmt.

In Figur 2 ist zum besseren Verständnis der Behälterausbildung der das Stückgut aufnehmende obere Teil 3 des Behälters von dem unteren Teil 2 des Behälters 1 abgenommen dargestellt, so dass die darunter befindliche Rahmenstruktur des Behälters 1 sichtbar wird. Das obere Teil 3 des Behälters 1 besteht aus einem tragfähigen elastischen Material, dessen Kanten 3a, 3b am unteren Teil 2 des Behälters 1 befestigt sind. Der untere Teil des Behälters 1 besteht aus einem Tragrahmen, der seinerseits aus den Querholmen 4 und den Längsholmen 5 zusammengesetzt ist. Querholme und Längsholme können aus unterschiedlich festen Materialien hergestellt sein.

Die Verbindung der Längsholme 5 mit den Querholmen 4 ist derartig gestaltet, dass der untere Teil 2 des Behälters 1 im beschränkten Maße verwindbar ist, mindestens so viel, dass er sich Unebenheiten der Förderbahn anpassen kann. Das den oberen Teil 3 des Behälters 1 bildende elastische Material kann ein Netzgewerbe, ein Tuchgewebe oder ein Gurtgeflecht sein, auf dem das Stückgut aufliegt und dass, ähnlich einer Hängematte, in den Behälter 1 eingehängt ist.

Wie in Figur 3 dargestellt, ist der Behälter 1, hier in einer Ansicht von unten, im Inneren des aus den Längsholmen 5 und den Querholmen 4 gebildeten Tragrahmens offen. Es ist bei Bedarf aber auch denkbar diese Öffnung durch ein ebenfalls elastisches verwindungsfähiges Material zu verschließen. An den Querholmen 4 sind Abschrägungen 6 angebracht, die Auflagekufen für den Behälter 1 bilden und der besseren Führung des Behälter 1 auf der Förderbahn dienen. Aus gleichem Grund sind die Längsholme 5 an ihren Ende bei 7 abgeschrägt.

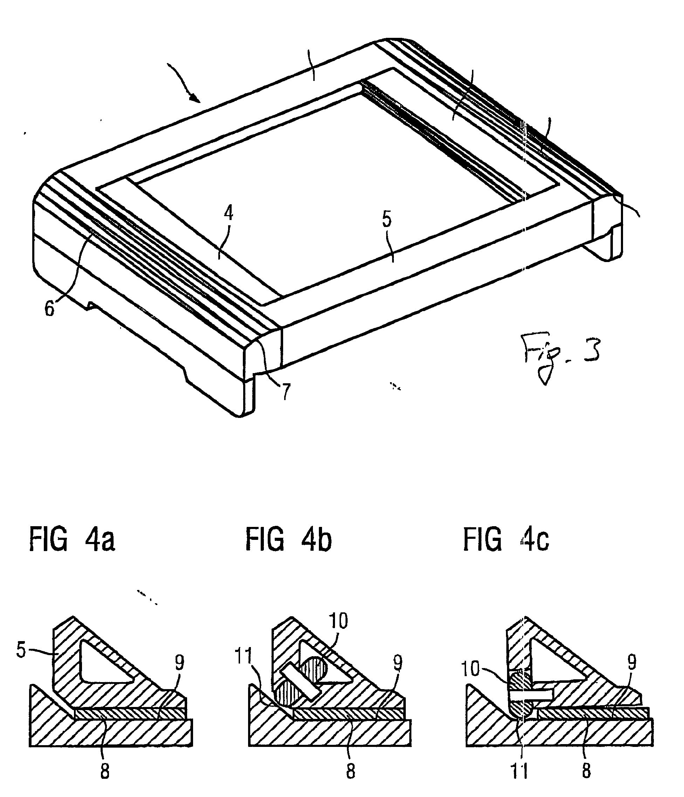

Die Unterseite der Längsholme 5 liegt, wie ein Querschnitt durch einen Längsholm 5 in Figur 4a zeigt, glatt auf dem Tragband 8 auf, das über eine Gleitfläche 9 der Förderbahn gezogen wird und den Behälter mitnimmt. In Figur 4b ist erkennbar innerhalb des Längsholmes 5 ein Abstützrad 10 im Winkel von ca. 45° zur Transportebene des Transportgurtes 9 geneigt gelagert. Dieses Abstützrad 10 kommt beispielsweise in Kurvenstrecken mit der an der Förderbahn ausgebildeten Lauffläche 11 in Kontakt und stützt den Behälter 1 gegen die wirksamen Fliehkräfte ab.

In Figur 4c ist ein eben solches Abstützrad 10 angeordnet, dort jedoch um eine horizontale Drehachse drehbar, so dass das Abstützrad 10 auf einer horizontalen Bahn 11 der Förderbahn abrollen kann. Das Abstützrad 10 ist derartig angeordnet, dass es nur dann in Kontakt mit der Abrollbahn 11 kommt, wenn in Folge zu hoher Traglasten der Druck auf den Transportgurt 9 zu groß wird oder durch Verkanten des Behälters 1 eine einseitige Kippwirkung entsteht, durch die die Reibungskräfte aus dem Gewicht des Behälter 1 auf den Transportgurt 9 zu groß werden würden.

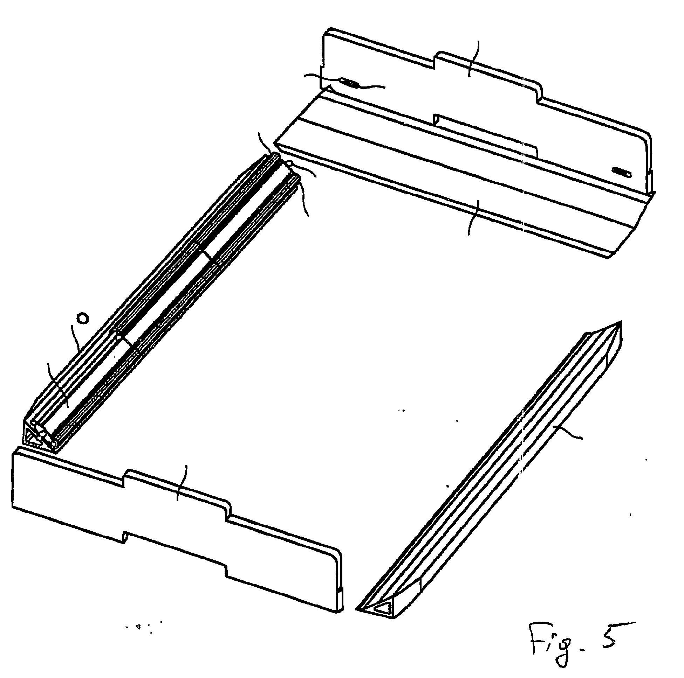

In Figur 5 ist ein erfindungsgemäßer Behälter in seinen Einzelteilen dargestellt. Erkennbar sind die beiden Behälterendstücke 12 mit den Querholmen 4, sowie die Längsholme 5, die über Zapfen 13 in Bohrungen 14 des Behälterendstückes 12 eingesetzt sind. Die Bohrungen sind als Langlöcher ausgebildet und nehmen je eine Druckfeder 15 auf, die den Zapfen 13 in Position hält, aber gleichzeitig ein Verwinden des aus den Querholmen und Längsholmen gebildeten Tragrahmens ermöglichen.

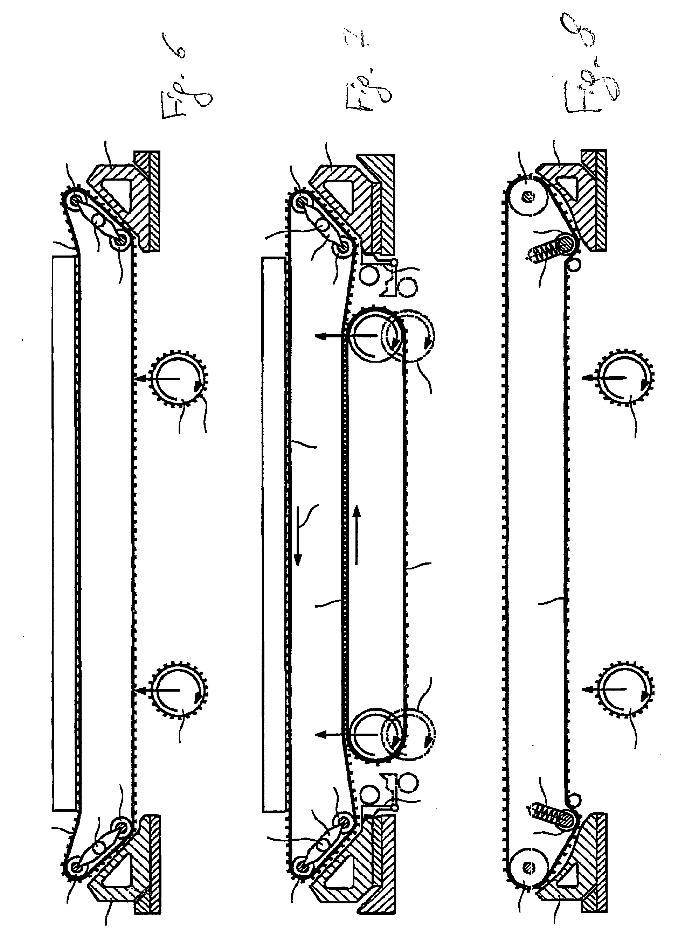

Wie an dem linken Längsholm 5 in Figur 5 erkennbar gezeichnet ist, sind an diesem Längsholm zwei Umlenkwalzen 16 und 17 in einer Wippe 18 gelagert, die um die Achse der Zapfen 13 frei einstellbar ist, wie später noch beschrieben wird. Die Umlenkwalzen 16, 17 beider Längsholme 5 führen ein um diese geschlungenes endloses Tragband (Querband), welches die Lagerfläche zur Aufnahme des Stückgutes bildet. Dieses Tragband ist in Figur 6 mit 19 bezeichnet. Dort sind in einem Querschnitt durch die Längsholme 5 die Umlenkwalzen 16 und 17 ebenso zu erkennen, wie die Wippe 18, die bei 20 ihre Schwenkachse hat.

Das Tragband 19 ist als Querband um die Umlenkwalzen 16 und 17 beider Längsholme 5 endlos geführt und trägt an seiner Oberfläche, mindestens bereichsweise, eine zahnartige Stollenstruktur 21, die bedarfsweise mit einer eben solchen Stollenstruktur 22 an der Umfangsfläche der unterhalb des Behälter angeordneten Antriebsräder 23 in Eingriff bringbar ist.

Alternativ dazu kann um zwei im Abstand zu einander angeordnete, um in Transportrichtung ausgerichtete Drehachsen umlaufenden Antriebsräder 23 ein Antriebsriemen 24 geschlungen sein, der mit einer dem Tragband 19 entsprechenden Stollenstruktur 21 versehen ist, und durch Anheben der Antriebsräder 23 mit dem Tragband 19 in Eingriff gebracht werden kann. Das Anheben der Antriebsräder 23 erfolgt vorzugsweise in den Entladestationen und bewirkt zunächst ein Anheben des Untertrums 25 des Tragbandes 19, wodurch das Obertrum 26 zwischen den Umlenkwalzen 16 im wesentlichen horizontal gespannt wird. Dadurch wird es möglich, beim Antrieb des Tragbandes 19 über die Antriebsräder 23 ein aufliegendes Stückgutteil in Pfeilrichtung 27 seitlich auszutragen und über eine entsprechende seitliche Abfördereinrichtung, beispielsweise eine Schurre, abzuführen.

Der vorstehend beschriebenen Wippe 18, an der die Umlenkwalzen 16 und 17 gelagert sind, kommt dabei eine besondere Bedeutung zu. In der Transportstellung der Behälter 1, wie sie beispielsweise in Figur 6 in einem Querschnitt durch den Behälter 1 dargestellt ist, ist die Wippe 18 um die Schwenkachse 20 derartig ausgerichtet, dass ein auf den Tragband 19 aufliegendes Stückgutteil die unteren Umlenkwalzen 17 an den Längsholm 5 andrückt, wodurch das Tragband 19 zwischen der seitlichen Oberfläche des Längsholmes 5 und der Umlenkwalze 17 reibschlüssig fixiert wird. Dadurch wird sichergestellt, dass bei aufliegendem Stückgut das Tragband 19 nicht selbsttätig in eine Umlaufbewegung gesetzt werden kann, sondern dass das Stückgut unverschiebbar auf dem, gegebenenfalls mit einer rutschfesten Oberfläche versehenen Tragband aufliegt.

Sobald, wie in Figur 7 dargestellt, die Antriebsräder 23, gegebenenfalls mit dem darum geschlungenen Antriebsriemen 25, nach oben bewegt werden, wird das Untertrum 25 des Tragbandes 19 angehoben, dadurch wird das Obertrum 26 gespannt und gleichzeitig werden die an der Wippe 18 gelagerten Umlenkwalzen 17 derartig um die Schwenkachse 20 der Wippen 18 geschwenkt, dass das die Umlenkwalze 17 mit dem Tragband 19 von der Seitenoberfläche des Längsholmes abgehoben werden. Die Fixierung des Tragbandes 19 ist damit aufgehoben, über die angehobenen Antriebsräder 23, die unterhalb des Behälter 1 in der Förderbahn gelagert sind, kann das Tragband 19 in Entladerichtung des Stückgutes angetrieben werden.

In Figur 7 sind auch die mit 31 bezeichneten Klinken schematisch erkennbar, mit denen der Behälter 1 in der Entladestation gegen Abheben von der Förderbahn gesichert wird, bevor die Antriebsrollen 23 angehoben werden. Die am Fördererrahmen befestigten Klinken 31 werden aus einer Ruhestellung unterhalb der Förderebenen nach oben geschwenkt und greifen hinter den Längsholm 5 des Behälters 1. Nach Abschluss des Entladevorganges werden die Klinken 31 in die Ruhestellung zurück geschwenkt und der Behälter 1 kann fortbewegt werden.

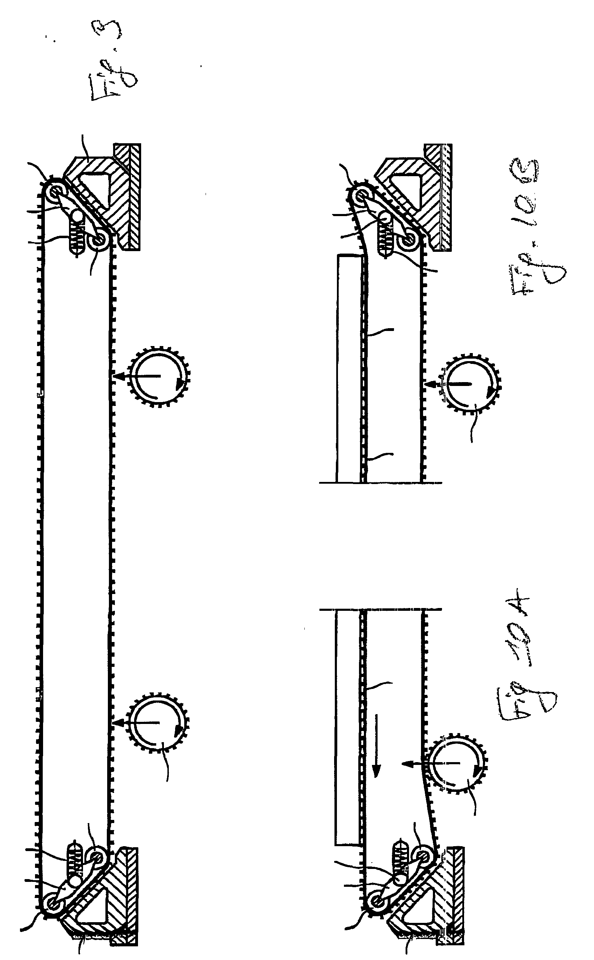

In Figur 8 ist eine andere Variante einer Bremsvorrichtung dargestellt, bei der neben einem Umlenkwalzenpaar 16 zusätzliche Rollen 28 von innen gegen das Tragband 19 derartig gepresst werden, dass das Tragband 19 auf die Seitenoberfläche der Längsholme 5 gepresst und dort unter Reibschluss gehalten wird. Die Rollen 28 werden gegen die Wirkung einer Feder 29 gehalten. Beim Anheben der Antriebsrollen 23 gegen das Untertrum 25 des Tragbandes 19 werden die Federn 29 über das Tragband 19 zusammengedrückt, so dass die Rollen 28 von der Innenseite des Tragbandes abgehoben werden und die Bremswirkung des Tragbandes zum Entladen des Stückgutes aufgehoben wird.

Eine ähnliche Wirkung hat die in Figur 9 dargestellte Alternative. Hier wirken Druckfedern 30 unmittelbar auf die Wippe 18 der Umlenkwalzen 16 und 17 und pressen die Umlenkwalzen gegen die Seitenfläche der Längsholme 5 an. Die Lagerung der Wippe 18 bei 20 bewirkt beim Anheben der Antriebsräder 23, wie dies an einer Seite des quergeschnittenen Behälter 1 in Figur 10a dargestellt ein Anheben der Umlenkwalze 17 und Abheben des Tragbandes 19 an der Oberfläche des Längsholmes 5, so dass bei gleichzeitig gestrafter Oberseite des Tragbandes 19 das Stückgut ausgetragen werden kann. In abgesenkter Position des Antriebsrades 23 bewirkt das auf dem Tragband 19 aufliegende Stückgut ein Einsenken des Obertrums 26 des Tragbandes 19 und gleichzeitig eine Zugkraft auf die Tragwalze 16, wie in Figur 10b dargestellt. Dadurch wird, unterstützt durch die Federwirkung der Druckfeder 30 die Wippe 18 mit der Umlenkwalze 17 gegen die Seitenfläche des Längsholmes 5 gepresst, wodurch das Tragband 19 zwischen der Umlenkwalze 16 und der Oberfläche des Längsholms 5 reibschlüssig gehalten wird.

Natürlich sind verschiedene ausgestaltende Varianten der Erfindung denkbar, solange der Behälter aus einem des Stückgut aufnehmenden oberen Teil mit einem tragfähigen, den unteren Teil des Behälter überspannenden elastischen Material besteht und der Behälter aus einem beschränkt verwindbaren, aus Längs- und Querholmen zusammengesetzten Tragrahmen besteht. Durch die Ausbildung von Kufen, Abschrägungen und gegebenenfalls von Führungsflächen im unteren Teil des Behälters kann dieser auch auf herkömmlichen Förderbahnen eingesetzt werden, wobei die vorstehend beschriebenen Vorteile dort ausgenutzt werden können. Die Behälter sind so geformt, dass sie ineinander stapelbar sind; aufgrund ihrer konstruktiven Ausbildung sind die Behälter gemessen an bekannten Behältern sehr leicht und damit einfach händelbar.

Im unteren Teil dieses Behälters können vorzugsweise außerhalb des Sichtbereiches der Durchleuchtungsstationen Transponder eingelassen oder angeordnet sein, über die Transportweg und das Ziel der Behälter steuerbar ist.

## Patentansprüche

1. Behälter zum Transportieren von Stückgütern, insbesondere von Gepäckstücken auf einer Förderbahn mit Trag- und Führungselementen für den Behälter und mindestens einer Entladestelle zum Entleeren des Stückgutes aus dem Behälter, wobei jeder Behälter aus einem oberen, das aufliegende Stückgut aufnehmenden Teil und einem unteren, auf der Förderbahn aufliegenden Teil besteht,
**dadurch gekennzeichnet,**
**dass** der das Stückgut aufnehmende obere Teil (3) des Behälters (1) aus einer den unteren Teil (2) des Behälters (1) tragfähig überspannenden, aus einem elastischen Material bestehenden Lagerfläche (3a, 19) gebildet ist.

2. Behälter nach Anspruch 1,
**dadurch gekennzeichnet,**
**dass** das die Lagerfläche (3a, 19) aus einem Netzgewebe besteht.

3. Behälter nach Anspruch 1,
**dadurch gekennzeichnet,**
**dass** das die Lagerfläche (3a, 19) aus einem Tuchgewebe besteht.

4. Behälter nach Anspruch 1,
**dadurch gekennzeichnet,**
**dass** das die Lagerfläche (3a, 19) aus einem Gurtgeflecht besteht.

5. Behälter nach einem der Ansprüche 1 bis 4, **dadurch gekennzeichnet, dass** das die Lagerfläche (3a, 19) rutschhemmend ausgeführt ist.

6. Behälter nach Anspruch 1 bis 5,
**dadurch gekennzeichnet,**
**dass** der obere Teil (3) und der untere (2) Teil des Behälters (1) aus einem für Röntgenstrahlungen durchlässigen Material gebildet sind.

7. Behälter nach einem der Ansprüche 1 bis 6,
**dadurch gekennzeichnet,**
**dass** der untere Teil (2) des Behälters (1) aus einem beschränkt verwindbaren, aus Längs- (5) und Querholmen (4) zusammengesetzten Tragrahmen besteht, innerhalb dessen die Lagerfläche (3a, 19) aus elastischem Material angeordnet ist.

8. Behälter nach Anspruch 7,
**dadurch gekennzeichnet,**
**dass** die Längsholme (5) des Behälters zur Übertragung kinetischer Energie und zur Aufnahme von horizontalen und vertikalen Führungskräften konturiert sind.

9. Behälter nach Anspruch 7 und 8,
**dadurch gekennzeichnet,**
**dass** die Verbindung der aneinandergrenzenden Längs- (5) und Querholme (4) raumgelenkig ist.

10. Behälter einem der Ansprüche 7 bis 9,
**dadurch gekennzeichnet,**
**dass** die Lagerfläche (3a, 19) beidseitig des Behälters (1) an dessen in Transportrichtung ausgerichteten Längsholmen (5) befestigt ist.

11. Behälter nach einem der Ansprüche 1 bis 10,
**dadurch gekennzeichnet,**
**dass** in oder an dem unteren Teil (2) des Behälters (1) Transponder angeordnet sind.

12. Behälter nach Anspruch 11,
**dadurch gekennzeichnet,**
**dass** die Transponder außerhalb des Sichtbereiches der Durchleuchtungsstationen angeordnet sind.

13. Behälter nach Anspruch 11 und 12,
**dadurch gekennzeichnet,**
**dass** die Transponder durch Metallabdeckungen gegen Röntgenstrahlen geschützt sind.

14. Behälter nach einem der Ansprüche 1 bis 13,
**dadurch gekennzeichnet,**
**dass** die Längs- (5) und/oder die Querholme (4) des Behälters (1) mit symmetrisch zur Behältermittelachse angeordneten Tragkufen (6) versehen sind.

15. Behälter nach einem der Ansprüche 1 bis 14,
**dadurch gekennzeichnet,**
**dass** den Tragkufen (6) und/oder den Längsholmen (5) in Transportrichtung umlaufende, auf Bahnen des Förderers abrollende Abstützrollen oder -räder (10) zugeordnet sind.

16. Behälter nach Anspruch 15,
**dadurch gekennzeichnet,**
**dass** die Bahnen (11) für die Abstützrollen oder -räder (10) seitlich neben dem Transportmittel der Behälter (1) ausgebildet sind und die Abstützrollen oder -räder (10) bei vorbestimmten Behälterbelastungen, auf den Bahnen (11) abtragend, einen Teil des Behältergewichtes aufnehmen.

17. Behälter nach einem der Ansprüche 15 oder 16,
**dadurch gekennzeichnet,**
**dass** die Abstützrollen oder -räder (10) mit positiven Sturz schräg nach innen geneigt angeordnet sind.

18. Behälter nach einem der Ansprüche 7 bis 17,
**dadurch gekennzeichnet,**
**dass** an den Querholmen (4) Kufen für Eckumsetzer angeordnet sind.

19. Behälter nach einem der Ansprüche 1 bis 18,
**dadurch gekennzeichnet,**
**dass** das Behälteroberteil als Querband (Tragband 19) ausgebildet ist.

20. Behälter nach Anspruch 19,
**dadurch gekennzeichnet,**
**dass** parallel zu den Längsholmen (5) des Behälters an jedem Längsholm (5) mindestens eine Umlenkwalze (16) für die das Behälteroberteil (2) überspannende, als endloses Tragband (19) gestaltete Lagerfläche angeordnet ist, um die das Tragband (19) antreibbar geführt ist.

21. Behälter nach Anspruch 19 oder 20,
**dadurch gekennzeichnet, dass** das Obertrum (21) des endlos umlaufenden Tragbandes (19) für das Stückgut in der Entladeposition des Behälters (1) zwischen den Umlenkwalzen (16) in eine im wesentlichen horizontale Auflageposition spannbar ist.

22. Behälter nach Anspruch 21,
**dadurch gekennzeichnet,**
**dass** zum Spannen des Obertrums (16) des umlaufenden Tragbandes das Untertrum (25) zwischen den unteren Umlenkwalzen (17) mittels Antriebsrollen oder -walzen (23) anhebbar ist.

23. Behälter nach einem der Ansprüche 19 bis 22,
**dadurch gekennzeichnet,**
**dass** zum Antrieb des Tragbandes (19) in der Entladeposition auf dessen Oberfläche mindestens bereichsweise eine quer zu dessen Umlaufrichtung verlaufende zahnartige Stollenstruktur (21) vorgesehen ist, mit der im Bereich des Untertrums (25) des Tragbandes (19) entsprechend konturierte Antriebsrollen (23) mindestens zeitweise in Eingriff bringbar sind.

24. Behälter nach Anspruch 23,
**dadurch gekennzeichnet,**
**dass** die Antriebsrollen (23) in der Entladestation des Behälters (1) unterhalb des Tragbandes (19) im Förderer gelagert sind und aus einer Ruheposition unterhalb der Förderebene in eine Entladeposition anhebbar sind, in der sie mit dem Tragband (19) korrespondieren.

25. Behälter nach einem der Ansprüche 19 bis 24,
**gekennzeichnet durch**
Bremselemente für das Tragband während des Transportes der Behälter, die **durch** beidseitig an den Längsholmen (5) an einer Wippe (18) gelagerte jeweils zwei Umlenkwalzen (16,17) gebildet sind, von denen **durch** Verschwenken der Wippe (18) mindestens eine Umlenkwalze (16 oder 17) mit dem Tragband (19) gegen den Längsholm (5) pressbar und damit das Tragband (19) in Umlaufrichtung blockierbar ist.

26. Behälter nach Anspruch 25,
**dadurch gekennzeichnet,**
**dass** das Anpressen der Umlenkwalze (17) mit dem Tragband (19) federkraftgestützt (30) erfolgt und das Lösen der Umlenkwalzen (17) entgegen der Federwirkung durch Anheben des Untertrums (25) des Tragbandes (19) in der Entladestation erfolgt.

27. Behälter nach einem der Ansprüche 1 bis 24,
**dadurch gekennzeichnet,**
**dass** in der Be- und/oder Entladeposition des Behälters (1) Elemente zum Fixieren des Behälters (1) während des Be- und/oder Entladens vorgesehen sind.

28. Behälter nach einem der Ansprüche 25 bis 27,
**dadurch gekennzeichnet,**
**dass** zum Fixieren der Behälter (1) in der Entladestation am Förderer angelenkte in den Behälter einschwenkbare Klinken (31) gegen Abheben vom Förderer vorgesehen sind.

29. Behälter nach einem der Ansprüche 1 bis 28,
**dadurch gekennzeichnet,**
**dass** der Behälter (1) stapelbar ist.
